# EUROPEAN PATENT SPECIFICATION

(11) **EP 0 579 308 B1**
(45) Date of publication and mention of the grant of the patent: **07.05.1997**
(21) Application number: 93201890.6
(22) Date of filing: 29.06.1993
(51) Int. Cl.: G01L 19/00

(54) **Pressure sensor assembly**
Drucksensoreinrichtung
Assemblage d'un capteur de pression

(30) Priority: 13.07.1992 US 912379
(43) Date of publication of application: 19.01.1994
(73) Proprietor: DELCO ELECTRONICS CORPORATION, Kokomo Indiana 46902 (US)
(72) Inventor: Maack, Steven Roy, Kokomo, Indiana 46902 (US)
(74) Representative: Denton, Michael John

(56) References cited:
- WO-A-81/03678

## Description

This invention relates to a pressure sensor assembly.

As part of a continuing effort to fine tune vehicle engine performance, more and more engine conditions are continually monitored. One of these is manifold pressure, which is generally negative, below ambient pressure, but is subject to rapid positive fluctuations, as in the case of engine back fire. Any pressure sensor must pass through an opening in the manifold wall, which must be sealed. In addition, it must be securely mounted to the manifold wall. Typically, the sealing and installation functions are separate and independent. The sensor probe inserted into the manifold wall is surrounded by a sealing sleeve, while the body of the sensor is retained to the manifold wall by separate fasteners, such as screws. While such an arrangement works well, there would be a cost advantage in eliminating installation steps and parts.

WO-A-81/03678 discloses a pressure sensing apparatus in which a fluid chamber is sealed by a shaped fitting.

The present invention seeks to provide an improved pressure sensor assembly.

According to an aspect of the present invention, there is provided a pressure sensor assembly as specified in claim 1.

It is possible to provide a sensor assembly which combines sealing and installation functions into one.

In a preferred embodiment, a manifold wall contains a cylindrical installation hole and the sensor consists of a sensor body with a depending cylindrical stem long enough to extend through the installation hole. The outside diameter of the stem is significantly smaller than the installation hole, except for an enlarged circular foot formed at the bottom of the stem. The stem foot is still small enough to fit through the installation hole with clearance, however.

The other component of the assembly of this embodiment is a combined retention and sealing boot moulded from a resilient, flexible material, in a generally cylindrical, sleeve shape. The centre of the boot is a cylindrical passage with a diameter substantially equal to the outside diameter of the stem. The outer surface of the boot preferably includes a series of axially spaced flexible fins, each substantially equal to the diameter of the installation hole. At the bottom of the boot is an enlarged circular flange, which is larger in diameter than the installation hole.

Installation can be a simple, two-step process. Preferably, the sensor body stem is first inserted through the boot central passage, which expands to allow the larger stem foot to pass completely through it. Then, the sensor body and boot are inserted together through the wall installation hole. The boot's lower flange bends back, popping out on the lower side of the hole, trapped between the wall and the stem foot. The stem can thus be tightly sealed to the boot central passage, and the boot ribs can be tightly sealed to the installation hole, so no pressure is lost. Should a rapid pressure rise occur, the trapped flange can prevent the assembly from being blown out.

It is possible with some embodiments to have a very simple structure which nevertheless can eliminate a fair amount of cost in assembly by combining the sealing and retention features in one structure. That is, the sealing boot surrounding the stem can also provide mounting retention by trapping the flexible lower flange between the wall and the foot of the stem.

An embodiment of the present invention is described below, by way of illustration only, with reference to the accompanying drawings, in which:
Figure 1 is an exploded partial cross-sectional view of a manifold wall installation hole, of an embodiment of retention, sealing boot and sensor body;
Figure 2 shows the sealing boot of Figure 1 installed on the sensor body;
Figure 3 shows the sealing boot and sensor body of Figure 1 during installation to the manifold wall;
Figure 4 shows the sealing boot and sensor body of Figure 1 as installed in the manifold wall; and
Figure 5 shows the sealing boot and sensor body of Figure 1 during a rapid pressure rise in the manifold.

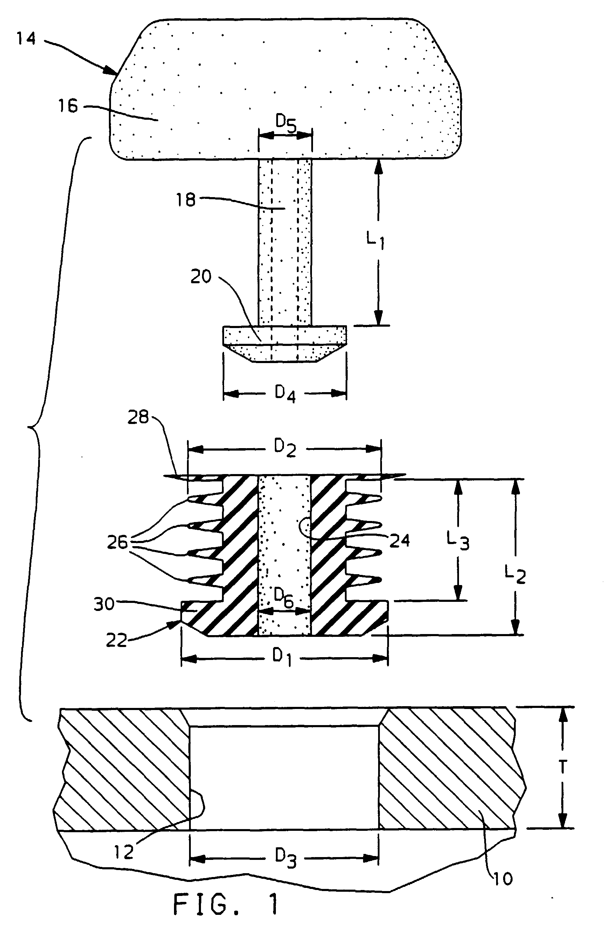

Referring to Figure 1, a manifold is represented by a section of manifold wall 10, which has a thickness T. The pressure above wall 10 is the ambient pressure, while the pressure below is manifold pressure. The manifold pressure may vary from the usual negative to infrequent and high, positive spikes, caused for example by an engine backfire. A cylindrical installation hole 12 drilled through wall 10 has a length equal to T, a fixed diameter D₃, and a chamfered upper edge. A sensor body 14 includes a large housing 16 which contains the actual sensor mechanism, and a depending cylindrical stem 18 long enough to extend through hole 12 and ported to transfer pressure to housing 16.

The diameter D₅ of stem 18 is considerably less than the diameter D₃ of the hole 12, but an enlarged circular foot 20 formed integrally at the bottom of stem 18 has a diameter D₄ which is larger than diameter D₅ but smaller than diameter D₃. Foot 20 also has a chamfered lower edge. The length between the top of foot 20 and the base of housing 16 is indicated at L₁, and is substantially greater than T.

A combined retention and sealing boot 22 is generally sleeve-shaped, moulded from a resilient flexible material such as a fluoro silicon polymer, which is also durable and heat resistant. A central cylindrical passage 24 has a diameter D₆ which is close to, or very slightly less than diameter D₅ of stem 18 and has a total length L₂ substantially equal to L₁. The outside of boot 22 has a series of four substantially identical, axially spaced annular fins 26, each of which has an edge diameter D₂ substantially equal to or just slightly greater than diameter D₃ of hole 12. A larger top fin 28, in the embodiment disclosed, has a diameter significantly larger than diameter D₃. At the bottom of boot 22 is an enlarged flange 30, thicker than the fins 26, and having a diameter D₁ larger than diameter D₃. Like foot 20, flange 30 has a chamfered lower edge. The inside length L₃ from the top of flange 30 to the top fin 28, is substantially equal to T.

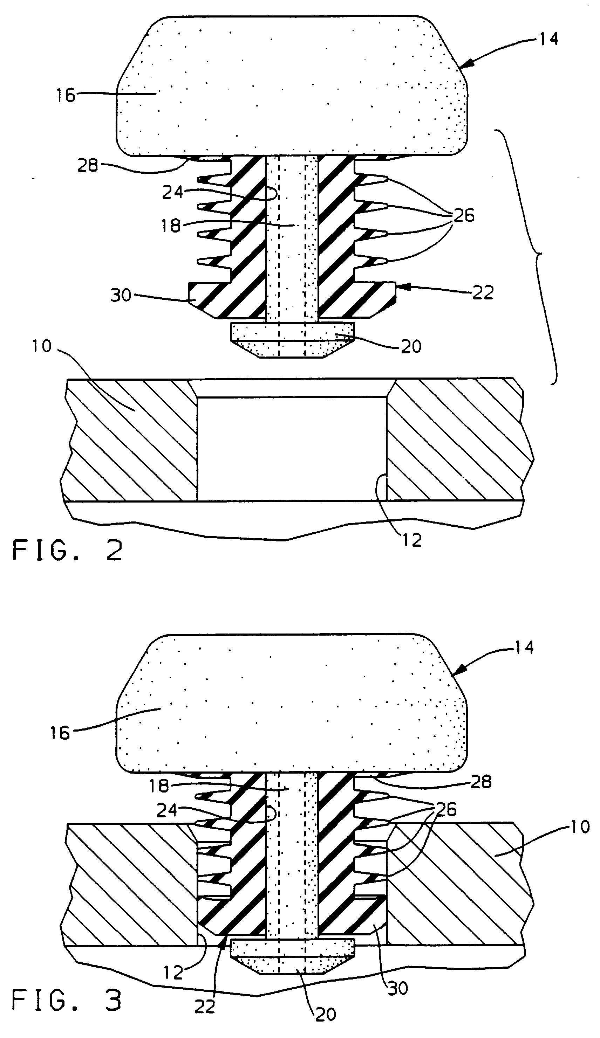

Referring to Figures 2 to 4, the operation and interaction of the various elements described above lead to a simplified installation process. Initially, the sensor body 14 is assembled to the boot 22 by inserting stem 18 through central passage 24. This is possible because of the resilience and elasticity of the material from which boot 22 is moulded, which will expand to allow foot 20 to pass therethrough, and is aided somewhat by the chamfered lower edge of foot 20. The central boot passage 24 retracts to seal tightly against the outer surface of stem 18. When complete, as shown in Figure 2, a subassembly of the two components is created, and boot 22 is securely trapped between foot 20 and sensor body 14, given the relationship between lengths L₁ and L₂.

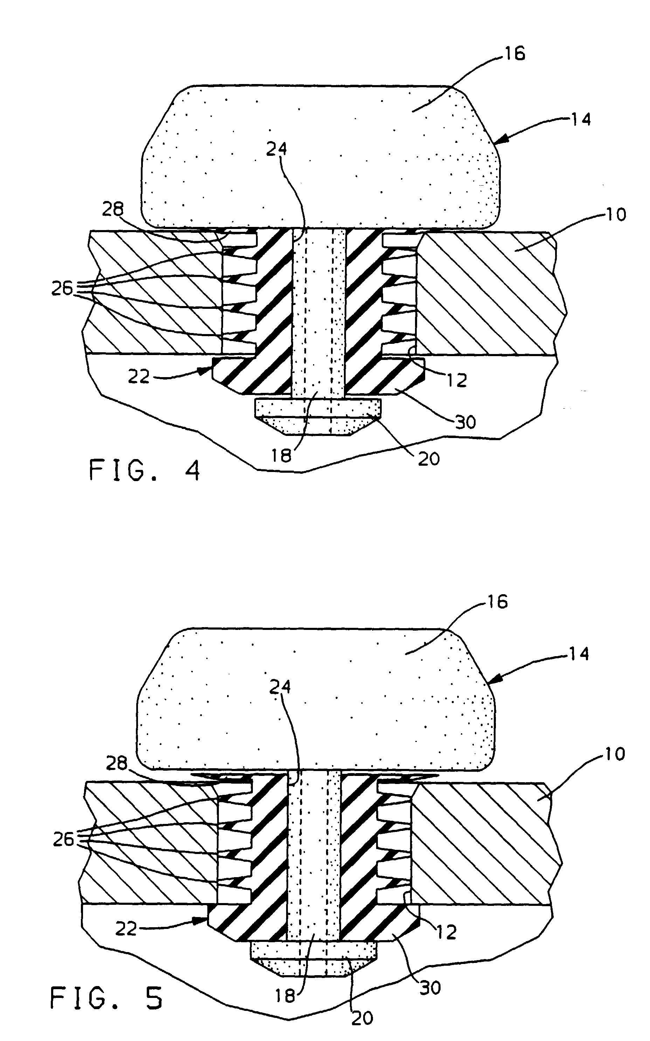

Next, as shown in Figure 3, the subassembly is inserted into installation hole 12, aided by the chamfered edges of hole 12 and boot flange 30. Flange 30, being larger in diameter, is compressed somewhat, and flexes axially up (in the view in Figure 3) as it passes through hole 12. Foot 20 clears hole 12 completely. The fins 26 are also flexed axially up slightly, but pass through with much less resistance than flange 30. Finally, as shown in Figure 4, flange 30 pops out below wall 10.

Referring to Figure 4, the normal operation after installation is illustrated. Pressure can enter housing 16 through the ported stem 18, but leakage is prevented. There is no leak path between stem 18 and boot central passage 24 because of the relation between diameters D₅ and D₆. Likewise, there is no leak path between the outside of boot 22 and hole 12, because of the relation between diameters D₂ and D₃.

In normal operation, retention is not a problem. Sensor body housing 16 is much larger than hole 12 and the manifold pressure below wall 10 is generally negative, tending to pull both housing 16 and boot 22 down (in the views of Figures 4 and 5), as is illustrated by the axial clearances between the underside of wall 10, boot flange 30, and stem foot 20. The larger top fin 28 helps to cushion sensor housing 16 from direct abutment with the upper side of wall 10.

Referring to Figure 5, high positive pressure, from for example an engine backfire, would tend to expel boot 22 and sensor body 14. However, the trapping of flange 30 between foot 20 and the underside of wall 10 prevents such expulsion. Flange 30 does not flex down to allow it to exit hole 12 as easily as it flexed up to enter hole 12. This selective inflexibility is partially a result of upper surface of flange 30, which abuts the underside of wall 10 around hole 12, not being chamfered. Even more so, this selective inflexibility is due to the cooperative support that flange 30 receives from the upper surface of stem foot 20, which is pushed into it by the positive pressure in the manifold. Therefore, flange 30 will not be expelled through hole 12 nearly so easily as it was inserted in the first place. Furthermore, the squeezing of flange 30 between the upper side of foot 20 and the under side of wall 10, illustrated in Figure 4, serves as an additional seal, aiding the sealing provided by the fins 26 and blocking off the boot passage 24 even more securely. Thus, not only is expulsion substantially prevented, but additional sealing is provided in response to any positive pressure spike.

Variations in the preferred embodiment could be made. For example, the outer surface of the boot 22 could simply be cylindrical and smooth, without the fins 26, so long as its outer diameter was similar to the outer diameter of fins 26. However, the fins 26 make installation easier because of their axial flexibility and because of the axial clearance they leave relative to the lower boot flange 30, improving its axial flexibility during insertion. Boot 22 could be moulded or otherwise integrally formed around the pressure sensor stem 18, starting out in the condition shown in Figure 2 and eliminating the installation step of inserting foot 20 through central passage 24.

## Claims

1. A pressure sensor assembly for installation through an aperture (12) in a wall (10) of a device separating an enclosed pressure within the device from ambient pressure, pressure in the device being subject to fluctuate above ambient pressure, tending to expel the sensor assembly from the aperture; the sensor assembly (14) comprising a sensor including a sensor body (16), a stem (18) depending from the sensor body (16) and an enlarged foot (20) at an end of the stem (18) remote from the sensor body (16), the foot (20) having a diameter smaller than the diameter of the aperture (12) into which the sensor is adapted to be installed; and a retention and sealing member (22) of flexible material including a base (24) for receiving in sealing manner the stem (18) of the sensor and including a sealing surface (26) having a diameter substantially equal to the diameter of the aperture (12) into which the sensor is adapted to be installed and an enlarged flange (30) with a diameter larger than the diameter of the aperture (12) into which the sensor is adapted to be installed; the sensor body (16) and retention and sealing member (22) being installable in the wall (10) silmultaneously, the enlarged flange (30) being flexible to pass through the aperture (12), the stem (18) and aperture (12) being sealable against pressure loss by sealing engagement with the member (22), the sensor body (16) being retainable in the wall (10) by trapping of the enlarged flange (30) between the wall and the enlarged foot (20) of the sensor.

2. A pressure sensor assembly according to claim 1, wherein the stem (18) of the sensor assembly (14) has a generally cylindrical outer surface and the retention and sealing member (22) includes a generally cylindrical central passage (24) with a diameter substantially equal to the diameter of the outer surface of the stem; the retention and sealing member (22) being installable on the stem (18) in a tight fitting sealing manner.

3. pressure sensor assembly according to claim 1 or 2, wherein the retention and sealing member (22) includes a plurality of axially spaced annular sealing rings (26).

## Patentansprüche

1. Ein Drucksensoraufbau zum Einbau durch eine Öffnung (12) in einer Wand (10) einer Einrichtung, die einen eingeschlossenen Druck innerhalb der Einrichtung von Umgebungsdruck trennt, wobei der Druck in der Einrichtung einer Schwankung über Umgebungsdruck ausgesetzt ist, die dazu neigt, den Sensoraufbau aus der Öffnung auszustoßen; wobei der Sensoraufbau (14) einen Sensor, der einen Sensorkörper (16), einen Schaft (18), der von dem Sensorkörper (16) herabhängt, und einen erweiterten Fuß (20) an einem Ende des Schafts (18) entfernt von dem Sensorkörper (16) umfaßt, wobei der Fuß (20) einen Durchmesser aufweist, der kleiner als der Durchmesser der Öffnung (12) ist, in welche der Sensor einbaubar ist; und ein Rückhalte- und Dichtungsglied (22) aus flexiblem Material umfaßt, das eine Basis (24), um auf abdichtende Weise den Schaft (18) des Sensors aufzunehmen, umfaßt, und eine Dichtungsoberfläche (26), die einen Durchmesser aufweist, der im wesentlichen gleich dem Durchmesser der Öffnung (12) ist, in welche der Sensor einbaubar ist, und einen erweiterten Flansch (30) umfaßt, mit einem Durchmesser, der größer als der Durchmesser der Öffnung (12) ist, in welche der Sensor einbaubar ist; wobei der Sensorkörper (16) und das Rückhalte- und Dichtungsglied (22) gleichzeitig in die Wand (10) einbaubar sind, der erweiterte Flansch (30) flexibel ist, um durch die Öffnung (12) zu treten, der Schaft (18) und die Öffnung (12) gegen Druckverlust durch Dichtungseingriff mit dem Glied (22) abdichtbar sind und der Sensorkörper (16) in der Wand (10) durch Einfangen des erweiterten Flansches (30) zwischen der Wand und dem erweiterten Fuß (20) des Sensors zurückhaltbar ist.

2. Ein Drucksensoraufbau nach Anspruch 1, worin der Schaft (18) des Sensoraufbaus (14) eine im allgemeinen zylindrische äußere Oberfläche aufweist, und das Rückhalte- und Dichtungsglied (22) einen im allgemeinen zylindrischen zentralen Durchgang (24) umfaßt, mit einem Durchmesser, der im wesentlichen gleich dem Durchmesser der äußeren Oberfläche des Schafts ist; wobei das Rückhalteund Dichtungsglied (22) auf dem Schaft (18) auf eine fest passende, abdichtende Weise anbaubar ist.

3. Ein Drucksensoraufbau nach Anspruch 1 oder 2, worin das Rückhalte- und Dichtungsglied (22) eine Vielzahl von axial beabstandeten, ringförmigen Dichtungsringen (26) umfaßt.

## Revendications

1. Ensemble de capteur de pression destiné à être installé à travers une ouverture (12) d'une paroi (10) d'un dispositif séparant une pression enfermée dans le dispositif, de la pression ambiante, la pression existant dans le dispositif étant soumise à des fluctuations au-dessus de la pression ambiante, tendant à expulser de l'ouverture l'ensemble de capteur ; l'ensemble (14) de capteur comportant un capteur comportant un corps (16) de capteur, une tige (18) solidaire du corps (16) de capteur et un pied agrandi (20) situé a une extrémité de la tige (18) à distance du corps (16) de capteur, le pied (20) ayant un diamètre plus petit que le diamètre de l'ouverture (12) à l'intérieur de laquelle il est prévu d'installer le capteur ; et un élément de retenue et d'étanchéité (22) constitué d'un matériau souple comportant une base (24) destinée à recevoir d'une manière étanche la tige (18) du capteur, et comportant une surface d'étanchéité (26) ayant un diamètre à peu près égal au diamètre de l'ouverture (12) à l'intérieur de laquelle il est prévu d'installer le capteur et un rebord agrandi (30) ayant un diamètre plus grand que le diamètre de l'ouverture (12) à l'intérieur de laquelle il est prévu d'installer le capteur ; le corps (16) de capteur et l'élément de retenue et d'étanchéité (22) pouvant être installés dans la paroi (10) de manière simultanée, le rebord agrandi (30) étant souple pour passer à travers l'ouverture (12), la tige (18) et l'ouverture (12) pouvant assurer l'étanchéité à l'encontre de pertes de pression par un contact étanche avec l'élément (22), le corps (16) de capteur pouvant être retenu dans la paroi (10) par coincement du rebord agrandi (30) entre la paroi et le pied agrandi (20) du capteur.

2. Ensemble de capteur de pression selon la revendication 1, dans lequel la tige (18) de l'ensemble (14) de capteur a une surface extérieure de manière générale cylindrique et l'élément de retenue et d'étanchéité (22) comporte un passage central (24) de manière générale cylindrique ayant un diamètre à peu près égal au diamètre de la surface extérieure de la tige ; l'élément de retenue et d'étanchéité (22) pouvant être installé sur la tige (18) d'une manière étanche par agencement serré.

3. Ensemble de capteur de pression selon la revendication 1 ou 2, dans lequel l'élément de retenue et d'étanchéité (22) comporte plusieurs anneaux d'étanchéité annulaires (26) axialement espacés.
